# EUROPEAN PATENT SPECIFICATION

(11) **EP 3 618 268 B1**
(45) Date of publication and mention of the grant of the patent: **24.07.2024**
(21) Application number: 18191356.7
(22) Date of filing: 29.08.2018
(51) Int. Cl.: H02P 25/22, H02P 1/04

(54) **CONTROLLING OF AN ELECTRICAL MACHINE**
STEUERUNG EINER ELEKTRISCHEN MASCHINE
COMMANDE D'UNE MACHINE ÉLECTRIQUE

(43) Date of publication of application: 04.03.2020
(73) Proprietor: ABB Schweiz AG, 5400 Baden (CH)
(72) Inventor: ISLAM, Jahirul, 724 71 Västerås (SE); PERETTI, Luca, 176 75 Järfälla (SE)
(74) Representative: Kransell & Wennborg KB

(56) References cited:
- DE-A1- 102012 207 534
- GB-A- 2 472 297
- US-A1- 2013 307 455
- ANONYMOUS: "Field Weakening", 20 December 2023 (2023-12-20), XP093116554, Retrieved from the Internet <URL:https://doc.synapticon.com/circulo/sw5.1/motion_control/advanced_control_options/field_weakening.html> [retrieved on 20240108]

## Description

### TECHNICAL FIELD

The present disclosure relates to electrical machines in general and re-configurable electrical machines in particular.

### BACKGROUND

Wide operational speed range of electrical machines is required in many applications such as automobile, traction, wind, fan, pump, compressor and many home appliances. To expand the operational speed range, several different solutions have been presented such as star-delta circuit re-configuration, series-parallel configuration, and the adjustment of the number of phase turns. The most critical limitation is the available voltage supply. To cope with the voltage range, field weakening control has been used, which is one of the more popular and widely accepted techniques to extend the speed of the motor. However, with an increased speed, the performance of the machine suffers as the electromagnetic losses of the machine increase, and as a consequence the machine efficiency decreases. In addition to the losses, the maximum torque is also reduced, and sometimes it cannot fulfil its requirement due to very low magnetic loading.

DE102012207534 discloses an electric motor and a selection unit for configuring the electric motor. Depending on the current driving condition and/or the rotational speed, a determination unit selects a favourable configuration. For example, at lower speed ranges of the electric motor not all phases of a three phase machine are used. At higher speeds more or all windings are used. This removes some of the concerns with the solutions mentioned above. The risk of supply voltage drop and field weakening is however still present. Another drawback with this electrical motor is that it will lose torque or power because all the windings are not used at low speeds.

GB2472297 A discloses an electric motor arrangement comprising an electric motor having a rotor, a stator, a first coil set and a second coil set. The first coil set is arranged turrent in the first coil set to generate a first torque on the rotor. The second coil set is arranged to form a second sub motor with the control device being arranged to control current in the second coil set to generate a second torque on the rotor. The first sub motor is arranged to have a first torque efficiency profile and the second sub motor is arranged to have a second torque efficiency profile. A controller is provided to determine a first torque value generated by the first sub motor and a second torque value generated by the second sub motor in response to a requested torque demand based on a required torque efficiency profile for the electric motor.

US2013/307455 A1 discloses a single motor which performs plural driving characteristics and can expand output range thereof. Three coils are wounded around each of the stator teeth A to F, and provided to each stator tooth A to F are switches for providing a concentrated winding state by connecting the three coils in series in each stator tooth A to F, and switches for providing a distributed winding state by connecting in series the coils of any one of units through the stator teeth A to F. Depending on the rotating speed, the torque or the like, the coils are changed between the concentrated winding state and the distributed winding state.

### SUMMARY

In view of the above, an object of the present disclosure is to provide a method of controlling an electrical machine which solves, or at least mitigates, the problems of the prior art.

There is hence according to a first aspect of the present disclosure provided a method as defined in independent claim 1.

By means of switching between the different configurations within the specified speed range, either from a 3n-configuration to a 3(n+1) configuration or from a 3(n+1) configuration to a 3n-configuration, the amount of field weakening may be reduced, and the supply voltage level may be better controlled and even kept constant, resulting in that harmonic losses can be minimised. The electrical machine will thereby operate with higher power and efficiency.

The electrical machine may preferably be a motor.

According to one embodiment in step a) the number of electrical phases is increased with increased operating speed. The number of electrical phases may be decreased with decreased operating speed.

According to one embodiment the speed range is between n and (n+0.5) times the nominal speed of the 3-phase configuration. By switching the number of electrical phases in this range there will be very little field weakening. The supply voltage level will however decrease from its nominal value.

In an embodiment in which the speed range is a single value which is n, there will be no or essentially no field weakening.

According to one embodiment the speed range is a single value which is (n+0.5) times the nominal speed of the 3-phase configuration. By switching the number of electrical phases in this range there will be a good trade-off between field weakening and supply voltage level drop.

According to one embodiment the speed range is between (n+0.5) and (n+1) times the nominal speed of the 3-phase configuration. By switching the number of electrical phases in this range the field weakening is increased, but the supply voltage level will decrease less from its nominal value than in the speed range of n and n+0.5.

According to one embodiment the speed range is a single value which is (n+1) times the nominal speed of the 3-phase configuration. By switching the number of electrical phases in this range the supply voltage level will not decrease from its nominal value. There will however be field weakening which is greater than in the previous examples.

According to one embodiment N=4. The total number of phases which may be obtained by means of re-configuration may thus be 12. The electrical machine may hence be re-configurable between 3 electrical phases and 12 electrical phases.

There is according to a second aspect of the present disclosure provided a computer program comprising computer code which when executed by processing circuitry of a control system causes the control system to perform the steps of the first aspect.

There is according to a third aspect of the present disclosure provided a control system for controlling an electrical machine comprising stator windings which are re-configurable between a 3-phase configuration and a 3n-phase configuration, where n is an integer in the range of 1 to N, wherein the control system comprises: processing circuitry, and a storage medium comprising computer code, wherein the control system is configured to perform the steps of the method of the first aspect when the computer code is executed by the processing circuitry.

There is according to a fourth aspect of the present disclosure provided an electrical machine system comprising: an electrical machine including stator windings re-configurable between a 3-phase configuration and a 3n-phase configuration, where n is an integer in the range of 1 to N, a switching unit connected to the stator windings, the switching unit comprising switches configured to re-configure the connections of the stator windings, and a control system configured to re-configure the stator windings between the 3-phase configuration and the 3n-phase configuration by controlling the switches.

According to one embodiment the stator windings consist of three phase windings in a 3-phase configuration, of which each phase winding consists of six coils, each coil being provided with two terminals that are connected to the switching unit. The total number of terminals will hence be 36, i.e. 18 coils times 2 terminals each. This is an optimal configuration in terms of the number of terminals for a re-configurable electrical machine between 3 electrical phases and 12 electrical phases. Since the terminals are connected to the switching unit, and the number of terminals is minimal, the size of the switching unit may be reduced. The switching unit will thereby occupy less space.

According to one embodiment, in a 6-phase configuration, the six coils of each three phase windings in a 3-phase configuration are subdivided by means of the switching unit into two sets of three coils to obtain 6 electrical phases.

Each set of coils hence forms an electrical phase.

According to one embodiment, in a 9-phase configuration, the six coils of each three phase windings in a 3-phase configuration are subdivided by means of the switching unit into three sets of two coils to obtain 9 electrical phases.

According to one embodiment, in a 12-phase configuration, the six coils of each three phase windings in a 3-phase configuration are subdivided by means of the switching unit into two sets of one coil and two sets of two coils to obtain 12 electrical phases.

According to one embodiment each coil of the sets with a single coil in the 12-phase configuration has as many turns as the total number of turns of the coils in each of the sets of two coils. All the sets of coils will therefore have the same voltage drop in any of the configurations.

### BRIEF DESCRIPTION OF THE DRAWINGS

The specific embodiments of the inventive concept will now be described, by way of example, with reference to the accompanying drawings, in which:
Fig. 1 schematically shows an example of an electrical machine system;
Fig. 2a shows a 3-phase configuration of an electrical machine of the electrical machine system in Fig. 1;
Fig. 2b shows a power converter connection for the 3-phase configuration shown in Fig. 2a;
Fig. 3a shows a 6-phase configuration of the electrical machine of the electrical machine system in Fig. 1;
Fig. 3b shows a power converter connection for the 6-phase configuration shown in Fig. 3a;
Fig. 4a shows a 9-phase configuration of the electrical machine of the electrical machine system in Fig. 1;
Fig. 4b shows a power converter connection for the 9-phase configuration shown in Fig. 4a;
Fig. 5a shows a 12-phase configuration of the electrical machine of the electrical machine system in Fig. 1;
Fig. 5b shows a power converter connection for the 12-phase configuration shown in Fig. 4a;
Figs 6a-6e depict voltage-speed graphs for different times of switching between the different configurations shown in Figs 3a-5a.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

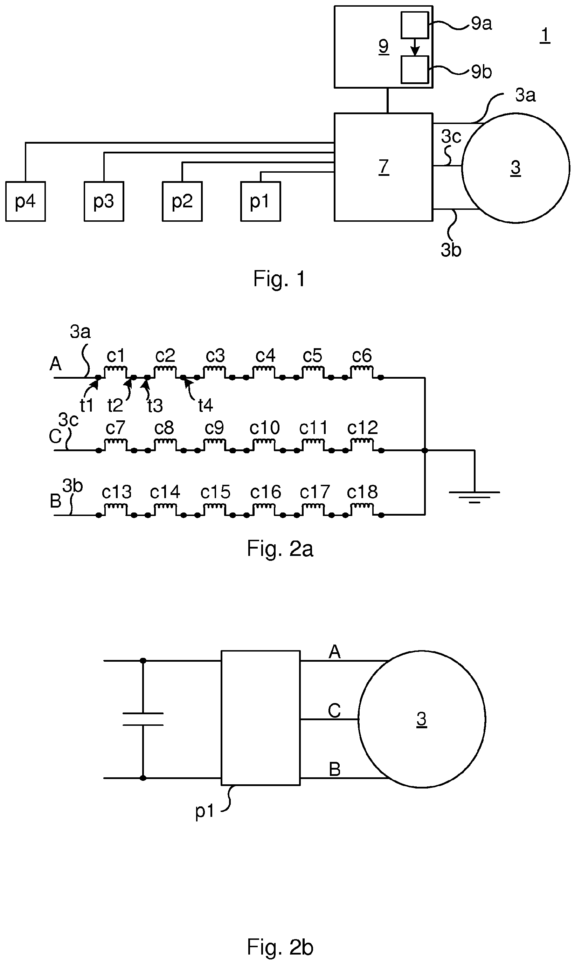

Fig. 1 shows an example of an electrical machine system 1. The electrical machine system 1 comprises an electrical machine 3. The electrical machine 3 is in this example a motor. The electrical machine 3 is re-configurable in that the number of electrical phases can be changed. The exemplified electrical machine 3 is re-configurable between 3 electrical phases, 6 electrical phases, 9 electrical phases and 12 electrical phases.

The electrical machine 3 comprises a stator and a rotor (not shown) configured to electromagnetically interact. The electrical machine 3 comprises a plurality of stator windings 3a-3c. The electrical machine 3 may have exactly three stator windings 3a-3c. Each stator winding 3a-3c comprises a plurality of series-connected coils in the 3-phase configuration. Re-configuration of the electrical machine 3 is obtained by connecting these coils in different ways as will be described in more detail in what follows. All three stator windings 3a-3c, and all the coils, are used in all of the configurations.

The electrical machine system 1 furthermore comprises a switching unit 7. The switching unit 7 comprises a plurality of switches. The switches may be mechanical or they may be electronic, e.g. in the form of gate controllable switches such as transistors, for example insulated gate bipolar transistors (IGBT). The switching unit 7 is a connection box. Hereto, the stator windings 3a-3c are connected to the switching unit 7. The switches are controllable to provide specific connections between the coils to obtain the herein described 3 to 12-phase configurations of the electrical machine 3. In particular, the stator windings 3a-3c may be subdivided into various coil configurations to re-configure the electrical machine 3.

The electrical machine system 1 comprises a control system 9. The control system 9 is configured to control the switches of the switching unit 7 to obtain any of the 3, 6, 9, and 12-phase configurations of the electrical machine 3. The control system 9 comprises a storage medium 9a and processing circuitry 9b. The storage medium 9a comprises computer code which when executed by the processing circuitry 9b causes the control system 9 to control the switches of the switching unit 7 to re-configure the electrical machine 3.

The storage medium 9a may for example be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory.

The processing circuitry 9b may use any combination of one or more of a suitable central processing unit (CPU), multiprocessor, microcontroller, digital signal processor (DSP), application specific integrated circuit (ASIC), field programmable gate arrays (FPGA) etc., capable of executing any herein disclosed operations concerning re-configuration of the electrical machine 3.

In the example shown in Fig. 1, the electrical machine system 1 comprises a plurality of power converters p1-p4. Preferably, the electrical machine system 1 comprises four power converters p1-p4. The number of power converters p1-p4 for powering the electrical machine 3 may be changed depending on the number of phases of the electrical machine 3. Thus, when the electrical machine 3 is re-configured, this re-configuration may also involve changing the number of power converters p1-p4 used for powering the electrical machine 3. Each power converter p1-p4 may be configured to be connected to three electrical phases. The power converters p1-p4 may be connected to the switching unit 7.

Fig. 2a shows the stator windings 3a-3c when the electrical machine 3 is in a 3-phase configuration. There are in this case exactly three stator windings 3a-3c, each being a phase winding. Each stator winding 3a-3c consists of six coils c1-c6, c7-c12, and c13-c18. The stator windings 3a-3c thus consist of a total number of 18 coils c1-c18. In the following, the term "stator winding" will refer to any of the set of series-connected coils c1-c6, c7-c12 and c13-18 in the 3-phase configuration. Different subdivision of these coils in 3n-phase configurations will be referred to as phase windings. Each coil c1-c18 has two individual terminals. For example, a first coil c1 has first and second terminals t1 and t2, and a second coil c2 has third and fourth terminals t3 and t4. In the 3-phase configuration shown in Fig. 2a, the second terminal t2 is connected to the third terminal t3, for example. All of the terminals of the coils c1-c18 are led to the switching unit 7. The control system 9 is configured to control the switches to connect the terminals of the coils c1-c18 in various ways such that the electrical machine 3 obtains the herein described phase configurations.

In the 3-phase configuration shown in Fig. 2a, the six coils c1-c6 of the first stator winding 3a are connected in series, forming electric phase A. The six coils c13-c18 of the second stator winding 3b are connected in series, forming electric phase B. The six coils c7-c12 of the third stator winding 3c are connected in series, forming electric phase C. The stator windings 3a-3c are connected in a wye connection. A terminal of each coil c6, c12, and c18 is hence connected to a common ground or neutral point.

Fig. 2b shows that only one of the power converters p1-p4 is used for powering the electrical machine 3 in the 3-phase configuration shown in Fig. 2a. The power converter p1 hence powers all three electrical phases A-C.

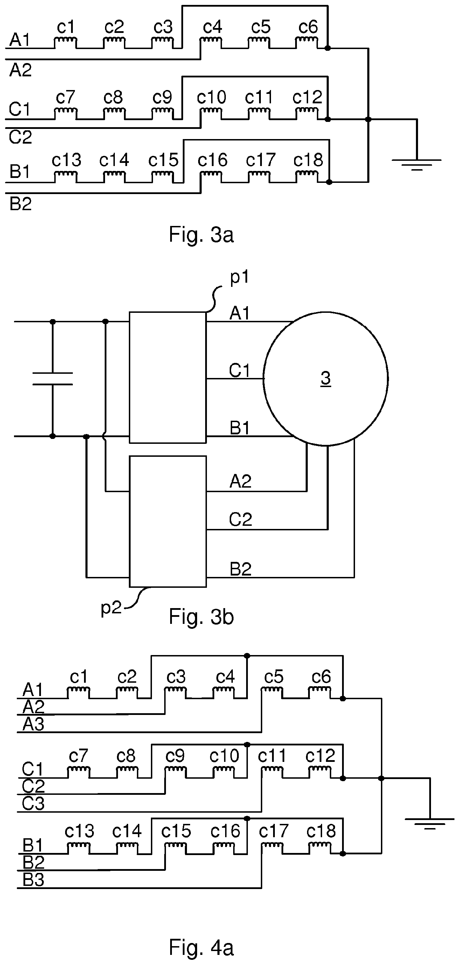

Fig. 3a shows the stator windings 3a-3c of the 3-phase configuration having been subdivided such that the electrical machine 3 is in a 6-phase configuration. The coils c1-c18 are connected such that each stator winding 3a-3c is now subdivided into two phase windings. The first stator winding 3a is subdivided into two phase windings A1 and A2, the second stator winding 3b is subdivided into two phase windings B1 and B2, and the third stator winding 3c is subdivided into two phase windings C1 and C2. In particular, the coils c1-c6 of the first stator winding 3a are subdivided into two sets of coils c1-c3, and c4-c6, each consisting of three series-connected coils. The coils c13-c18 of the second stator winding 3b are subdivided into two sets of coils c13-c15, and c16-c18, each consisting of three series-connected coils. The coils c7-c12 of the third stator winding 3c are subdivided into two sets of coils c7-c9, and c10-c12, each consisting of three series-connected coils. One of the terminals of the third coil c3 is connected to the grounded terminal or neutral point of the sixth coil c6 instead of to one of the terminals of the fourth coil c4, which was the case in the 3-phase configuration. Corresponding connections have also been made for the second stator winding 3b and the third stator winding 3c. All sets of coils may be connected to ground or neutral point corresponding to the wye-connection in the 3-phase configuration.

Fig. 3b shows that two power converters p1 and p2 are used for powering the electrical machine 3 in the 6-phase configuration shown in Fig. 3a. Each power converter p1 and p2 is configured to power a respective set of three phases. For example, a first power converter p1 may be connected to the phase windings A1-C1 and a second power converter p2 may be connected to the phase windings A2-C2.

Fig. 4a shows the stator windings 3a-3c of the 3-phase configuration having been subdivided such that the electrical machine 3 is in a 9-phase configuration. The coils c1-c18 are connected such that each stator winding 3a-3c is now subdivided into three phase windings. The first stator winding 3a is subdivided into three phase windings A1-A3, the second stator winding 3b is subdivided into three phase windings B1-B3, and the third stator winding 3c is subdivided into three phase windings C1-C3. In particular, the coils c1-c6 of the first stator winding 3a are subdivided into three sets of coils c1-c2, c3-c4 and c5-c6, each consisting of two series-connected coils. The coils c13-c18 of the second stator winding 3b are subdivided into three sets of coils c13-c14, c15-16 and c17-c18, each consisting of two series-connected coils. The coils c7-c12 of the third stator winding 3c are subdivided into three sets of coils c7-c8, c9-10 and c11-c12, each consisting of two series-connected coils.

One of the terminals of the second coil c2 is connected to the grounded terminal or neutral point of the sixth coil c6 instead of to the terminal of the third coil c3, which was the case in the 3-phase and 6-phase configurations. One of the terminals of the fourth coil c4 is connected to the grounded terminal or neutral point of the sixth coil c6 instead of to the terminal of the fifth coil c5, which was the case in the 3-phase and 6-phase configurations. Corresponding connections have also been made for the second stator winding 3b and the third stator winding 3c. All sets of coils may be connected to ground or neutral point corresponding to the wye-connection in the 3-phase configuration.

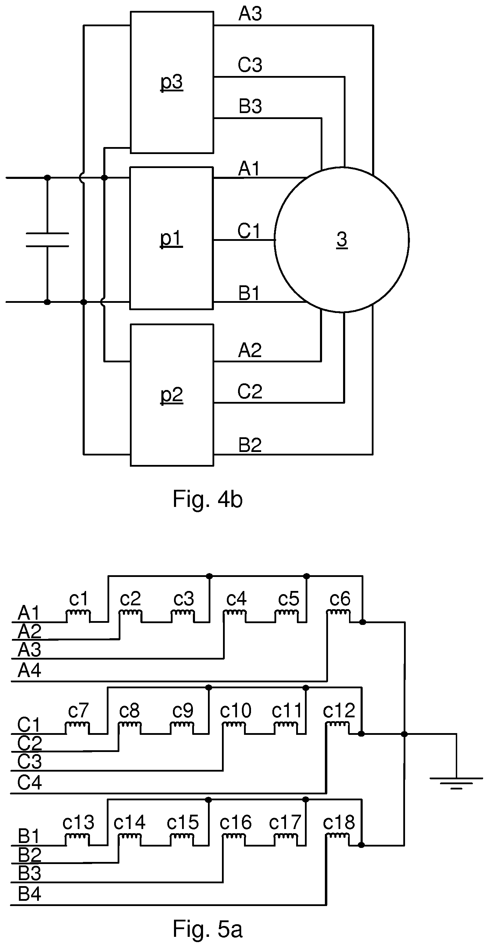

Fig. 4b shows that three power converters p1-p3 are used for powering the electrical machine 3 in the 9-phase configuration shown in Fig. 4a. Each power converter p1-p3 is configured to power a respective set of three phases. For example, the first power converter p1 may be connected to the phase windings A1-C1, the second power converter p2 may be connected to the phase windings A2-C2, and a third power converter p3 may be connected to the phase windings A3-C3.

Fig. 5a shows the stator windings 3a-3c of the 3-phase configuration having been subdivided such that the electrical machine 3 is in a 12-phase configuration. The coils c1-c18 are connected such that each stator winding 3a-3c is now subdivided into four phase windings. The first stator winding 3a is subdivided into four phase windings A1-A4, the second stator winding 3b is subdivided into four phase windings B1-B4, and the third stator winding 3c is subdivided into four phase windings C1-C4. In particular, the coils c1-c6 of the first stator winding 3a are subdivided into two sets of a single coil c1 and c6, namely the first and the sixth coil, and into two sets of coils consisting of two series-connected coils c2-c3 and c4-c5 each. The coils c13-c18 of the second stator winding 3b are subdivided into two sets of a single coil c13 and c18, namely the thirteenth and the eighteenth coil, and into two sets of coils consisting of two series-connected coils c14-c15 and c16-c17 each. The coils c7-c12 of the third stator winding 3c are subdivided into two sets of a single coil c7 and c12, namely the seventh and the twelfth coil, and into two sets of coils consisting of two series-connected coils c8-c9 and c10-c11 each.

One of the terminals of the first coil c1 is connected to the grounded terminal or neutral point of the sixth coil c6 instead of to the terminal of the second coil c2, which was the case in the 3-phase, 6-phase and 9-phase configurations. Furthermore, one of the terminals of the third coil c3 and of the fifth coil c5 is connected to the grounded terminal or neutral point of the sixth coil c6 instead of to the terminal of the fourth coil c4 and sixth coil c6, respectively, which was the case in the 3-phase and 9-phase configurations. Corresponding connections have also been made for the second stator winding 3b and the third stator winding 3c. All sets of coils may be connected to ground corresponding to the wye-connection in the 3-phase configuration.

The sets of coils which are formed by a single coil, i.e. coils c1, c6, c7, c12, c13, and c18, have as many turns as the total number of turns of any of the sets of coils c2-c3, coils c4-c5, coils c8-c9, coils c10-c11, coils c14-c15, and coils c16-c17, i.e. those pairs of coils which are included in sets of coils consisting of two coils in the 12-phase configuration of the electrical machine 3. In the first stator winding 3a, the first coil c1 and the sixth coil c6, which form the single coil sets may have k turns each, and one of coils c2 and c3 may have k/3 turns while the other one has 2k/3 turns. In particular, the second coil c2 may have k/3 turns and the third coil c3 may have 2k/3 turns. Furthermore, one of coils c4 and c5 may have k/3 turns while the other one has 2k/3 turns. In particular, the fourth coil c4 may have 2k/3 turns and the fifth coil c5 may have k/3 turns. The same applies to the corresponding coils of the second stator winding 3b and the third stator winding 3c.

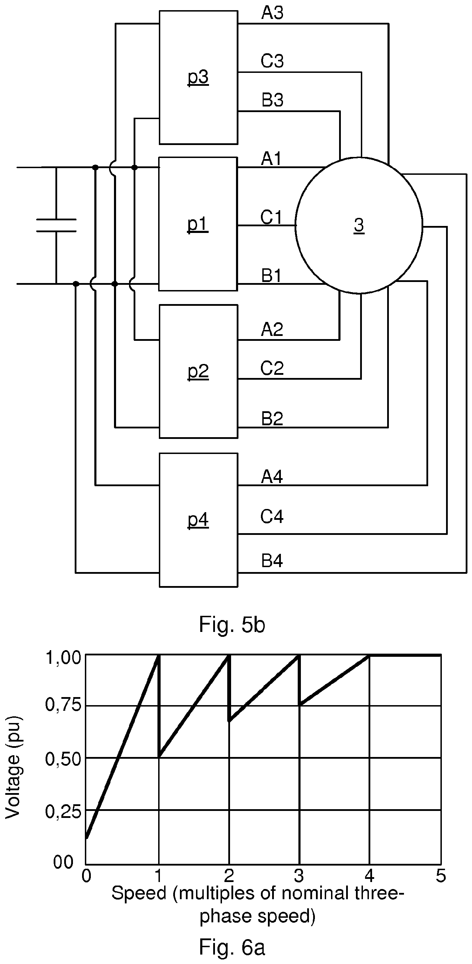

Fig. 5b shows that four power converters p1-p4 are used for powering the electrical machine 3 in the 12-phase configuration shown in Fig. 5a. Each power converter p1-p4 is configured to power a respective set of three phases. For example, the first power converter p1 may be connected to the phase windings A1-C1, the second power converter p2 may be connected to the phase windings A2-C2, the third power converter p3 may be connected to the phase windings A3-C3, and a fourth power converter p4 may be connected to the phase windings A4-C4.

Figs 6a-e show examples of when the switching by means of the control system 9 and the switching unit 7 between the different configurations may be performed when the operational speed of the electrical machine 3 is increased.

In the example shown in Fig. 6a switching between a 3n-phase configuration and a 3(n+1) phase configuration of the electrical machine 3, where n=1,...,3, is performed at an operational speed of n times the nominal speed of the 3-phase configuration. Thus, the electrical machine 3 is re-configured from a 3-phase configuration to a 6-phase configuration at nominal speed of the 3-phase configuration, and from a 6-phase configuration to a 9-phase configuration at two times the nominal speed of the 3-phase configuration, and from a 9-phase configuration to a 12-phase configuration at three times the nominal speed of the 3-phase configuration. As can be seen, the supply voltage falls at each instance of switching/re-configuration but there will be no field weakening.

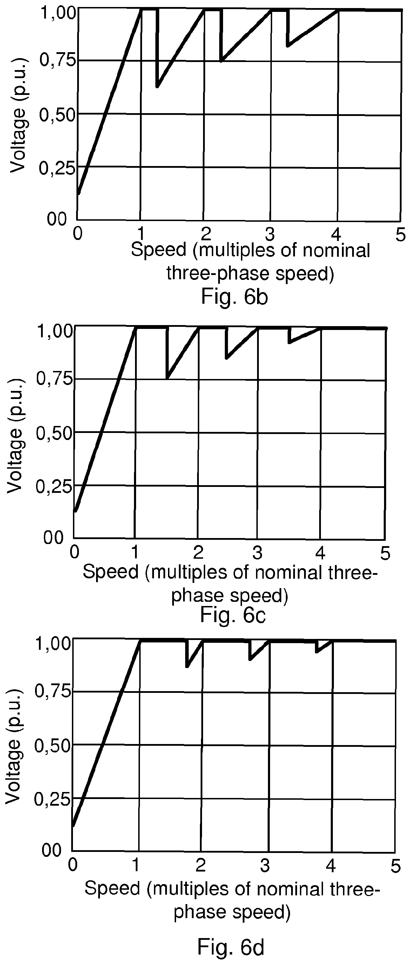

In the example shown in Fig. 6b switching between a 3n-phase configuration and a 3(n+1) phase configuration of the electrical machine 3 is performed at (n+0.25) times the nominal speed of the 3-phase configuration. Thus, the electrical machine 3 is re-configured from a 3-phase configuration to a 6-phase configuration at 1.25 times the nominal speed of the 3-phase configuration, and from a 6-phase configuration to a 9-phase configuration at 2.25 times the nominal speed of the 3-phase configuration, and from a 9-phase configuration to a 12-phase configuration at 3.25 times the nominal speed of the 3-phase configuration. As can be seen, the supply voltage falls less at each instance of switching/re-configuration than in the example in Fig. 6a, but there will be more field weakening.

In the example shown in Fig. 6c switching between a 3n-phase configuration and a 3(n+1) phase configuration of the electrical machine 3 is performed at (n+0.5) times the nominal speed of the 3-phase configuration. Thus, the electrical machine 3 is re-configured from a 3-phase configuration to a 6-phase configuration at 1.5 times the nominal speed of the 3-phase configuration, and from a 6-phase configuration to a 9-phase configuration at 2.5 times the nominal speed of the 3-phase configuration, and from a 9-phase configuration to a 12-phase configuration at 3.5 times the nominal speed of the 3-phase configuration. As can be seen, the supply voltage falls less at each instance of switching/re-configuration compared to the example shown in Fig. 6b, but there will be more field weakening.

In the example in Fig. 6d switching between a 3n-phase configuration and a 3(n+1) phase configuration of the electrical machine 3 is performed at (n+0.75) times the nominal speed of the 3-phase configuration. Thus, the electrical machine 3 is re-configured from a 3-phase configuration to a 6-phase configuration at 1.75 times the nominal speed of the 3-phase configuration, and from a 6-phase configuration to a 9-phase configuration at 2.75 times the nominal speed of the 3-phase configuration, and from a 9-phase configuration to a 12-phase configuration at 3.75 times the nominal speed of the 3-phase configuration. As can be seen, the supply voltage falls less at each instance of switching/re-configuration compared to the case in the example in Fig. 6c, but there will be more field weakening.

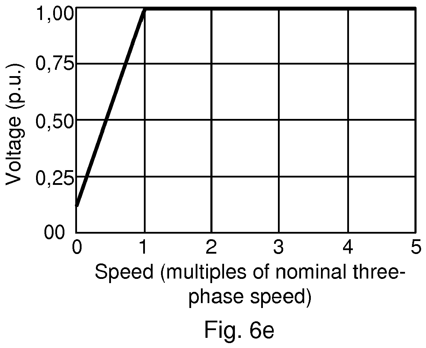

In Fig. 6e switching between a 3n-phase configuration and a 3(n+1) phase configuration of the electrical machine 3 is performed at (n+1) times the nominal speed of the 3-phase configuration. Thus, the electrical machine 3 is re-configured from a 3-phase configuration to a 6-phase configuration at two times the nominal speed of the 3-phase configuration, and from a 6-phase configuration to a 9-phase configuration at three times the nominal speed of the 3-phase configuration, and from a 9-phase configuration to a 12-phase configuration at four times the nominal speed of the 3-phase configuration. As can be seen, the supply voltage does not fall at all at the instances of switching/re-configuration, but there will be more field weakening than in any of the examples in Figs 6a-d.

When the speed is decreased, the electrical machine 3 is re-configured from a higher phase configuration to a lower phase configuration, i.e. from a 3(n+1)-phase configuration to a 3n-phase configuration. The switching is in this case performed in the same manner as when the speed increases. Thus, switching from a 3(n+1)-phase configuration to a 3n-configuration is performed in a speed range between n and (n+1) times a nominal speed of the 3-phase configuration.

## Claims

1. A method of controlling an electrical machine (3) comprising stator windings (3a-3c) which are re-configurable between a 3-phase configuration and a 3n-phase configuration, where n is any integer in the range of 1 to N, wherein the method comprises:
a) switching the number of electrical phases of the electrical machine (3) between 3-phase and 3n-phase based on an operating speed of the electrical machine (3),
wherein switching between a 3n-phase configuration and a 3(n+1) configuration is performed in a speed range between n and (n+1) times a nominal speed of the 3-phase configuration, **characterized in that** each stator winding (3a-3c) comprises a plurality of series-connected coils (c1-c6, c7-c12, c13-c18) in the three-phase configuration, wherein in all configurations all the stator windings (3a-3c) are used by subdividing the coils (c1-c6, c7-c12, c13-c18) to adjust the number of electrical phases.

2. The method as claimed in claim 1, wherein in step a) the number of electrical phases is increased with increased operating speed.

3. The method as claimed in claim 1 or 2, wherein the speed range is between n and (n+0.5) times the nominal speed of the 3-phase configuration.

4. The method as claimed in claim 3, wherein the speed range is a single value which is (n+0.5) times the nominal speed of the 3-phase configuration.

5. The method as claimed in claim 1 or 2, wherein the speed range is between (n+0.5) and (n+1) times the nominal speed of the 3-phase configuration.

6. The method as claimed in claim 5, wherein the speed range is a single value which is (n+1) times the nominal speed of the 3-phase configuration.

7. The method as claimed in any of the preceding claims, wherein N=4.

8. A computer program comprising computer code which when executed by processing circuitry (9b) of a control system (9) causes the control system (9) to perform the steps of the method as claimed in any of claims 1-7.

9. A control system (9) for controlling an electrical machine (3) comprising stator windings (3a-3c) which are re-configurable between a 3-phase configuration and a 3n-phase configuration, where n is an integer in the range of 1 to N, wherein the control system (3) comprises:
processing circuitry (9b), and
a storage medium (9a) comprising computer code,
**characterized in that** the control system (9) is configured to perform the steps of the method as claimed in any of claims 1-7 when the computer code is executed by the processing circuitry (9b).

10. An electrical machine system (1) comprising:
an electrical machine (3) including stator windings (3a-3c) re-configurable between a 3-phase configuration and a 3n-phase configuration, where n is any integer in the range of 1 to N,
a switching unit (7) connected to the stator windings (3a-3c), the switching unit (7) comprising switches configured to re-configure the connections of the stator windings (3a-3c), and
a control system (9) as claimed in claim 9, configured to re-configure the stator windings (3a-3c) between the 3-phase configuration and the 3n-phase configuration by controlling the switches.

11. The electrical machine system (1) as claimed in claim 10, wherein the stator windings (3a-3c) consist of three phase windings in a 3-phase configuration, of which each phase winding consists of six coils (c1-c6, c7-c12, c13-c18), each coil (c1-c6, c7-c12, c13-c18) being provided with two terminals that are connected to the switching unit (7).

12. The electrical machine system (1) as claimed in claim 11, wherein in a 6-phase configuration, the six coils (c1-c6, c7-c12, c13-c18) of each three phase windings in a 3-phase configuration are subdivided by means of the switching unit (7) into two sets of three coils to obtain 6 electrical phases.

13. The electrical machine system (1) as claimed in claim 11 or 12, wherein in a 9-phase configuration, the six coils (c1-c6, c7-c12, c13-c18) of each three phase windings in a 3-phase configuration are subdivided by means of the switching unit (7) into three sets of two coils to obtain 9 electrical phases.

14. The electrical machine system (1) as claimed in any of claims 11-13, wherein in a 12-phase configuration, the six coils (c1-c6, c7-c12, c13-c18) of each three phase windings in a 3-phase configuration are subdivided by means of the switching unit (7) into two sets of one coil and two sets of two coils to obtain 12 electrical phases.

15. The electrical machine system (1) as claimed in claim 14, wherein each coil (c1, c6, c7, c12, c13, c18) of the sets with a single coil in the 12-phase configuration has as many turns as the total number of turns of the coils (c2-c5, c8-c11, c14-c17) in each of the sets of two coils.

## Patentansprüche

1. Verfahren zum Steuern einer elektrischen Maschine (3) umfassend Statorwicklungen (3a-3c), die zwischen einer 3-phasigen Konfiguration und einer 3n-phasigen Konfiguration umkonfigurierbar sind, wo n eine beliebige ganze Zahl im Bereich von 1 bis N ist, wobei das Verfahren umfasst:
a) Umschalten der Anzahl der elektrischen Phasen der elektrischen Maschine (3) zwischen 3-phasig und 3n-phasig basierend auf einer Betriebsgeschwindigkeit der elektrischen Maschine (3),
wobei das Umschalten zwischen einer 3n-phasigen Konfiguration und einer 3 (n + 1) Konfiguration in einem Geschwindigkeitsbereich zwischen n und (n + 1) mal eine Nenndrehzahl der 3-phasigen Konfiguration, **dadurch gekennzeichnet, dass** jede Statorwicklung (3a-3c) eine Mehrzahl von in Reihe geschalteten Spulen (c1-c6, c7-c12, c13-c18) in der dreiphasigen Konfiguration umfasst, wobei in allen Konfigurationen alle Statorwicklungen (3a-3c) durch Unterteilen der Spulen (c1-c6, c7-c12, c13-c18) verwendet werden, um die Anzahl der elektrischen Phasen anzupassen.

2. Verfahren nach Anspruch 1, wobei in Schritt a) die Anzahl der elektrischen Phasen mit erhöhter Betriebsgeschwindigkeit erhöht wird.

3. Verfahren nach Anspruch 1 oder 2, wobei der Geschwindigkeitsbereich zwischen n und (n+0,5) mal der Nenngeschwindigkeit der 3-phasigen Konfiguration liegt.

4. Verfahren nach Anspruch 3, wobei der Geschwindigkeitsbereich ein einzelner Wert ist, der (n+0,5) mal der Nenngeschwindigkeit der 3-phasigen Konfiguration ist.

5. Verfahren nach Anspruch 1 oder 2, wobei der Geschwindigkeitsbereich zwischen (n+0,5) und (n+1) mal der Nenngeschwindigkeit der 3-phasigen Konfiguration liegt.

6. Verfahren nach Anspruch 5, wobei der Geschwindigkeitsbereich ein einzelner Wert ist, der (n+1) mal der Nenngeschwindigkeit der 3-phasigen Konfiguration ist.

7. Verfahren nach einem der vorhergehenden Ansprüche, wobei N=4.

8. Computerprogramm, das Computercode umfasst, der, wenn er durch eine Verarbeitungsschaltungsanordnung (9b) eines Steuersystems (9) ausgeführt wird, das Steuersystem (9) veranlasst, die Schritte des Verfahrens nach einem der Ansprüche 1-7 durchzuführen.

9. Steuersystem (9) zum Steuern einer elektrischen Maschine (3) umfassend Statorwicklungen (3a-3c), die zwischen einer 3-phasigen Konfiguration und einer 3n-phasigen Konfiguration umkonfigurierbar sind, wo n eine ganze Zahl im Bereich von 1 bis N ist, wobei das Steuersystem (3) umfasst:
eine Verarbeitungsschaltungsanordnung (9b), und
ein Speichermedium (9a), das Computercode umfasst,
**dadurch gekennzeichnet**, das das Steuersystem (9) dazu konfiguriert ist, die Schritte des Verfahrens nach einem der Ansprüche 1-7 durchzuführen, wenn der Computercode durch die Verarbeitungsschaltungsanordnung (9b) ausgeführt wird.

10. Elektrisches Maschinensystem (1), umfassend:
eine elektrische Maschine (3), die Statorwicklungen (3a-3c) beinhaltet, die zwischen einer 3-phasigen Konfiguration und einer 3n-phasigen Konfiguration umkonfigurierbar sind, wo n eine beliebige ganze Zahl im Bereich von 1 bis N ist,
eine Umschalteinheit (7), die mit den Statorwicklungen (3a-3c) verbunden ist, wobei die Umschalteinheit (7) Schalter umfasst, die dazu konfiguriert sind, die Verbindungen der Statorwicklungen (3a-3c) umzukonfigurieren, und
ein Steuersystem (9) nach Anspruch 9, das dazu konfiguriert ist, die Statorwicklungen (3a-3c) zwischen der 3-phasigen Konfiguration und der 3n-phasigen Konfiguration durch Steuern der Schalter umzukonfigurieren.

11. Elektrisches Maschinensystem (1) nach Anspruch 10, wobei die Statorwicklungen (3a-3c) aus drei Phasenwicklungen in einer 3-phasigen Konfiguration bestehen, von denen jede Phasenwicklung aus sechs Spulen (c1-c6, c7-c12, c13-c18) besteht, wobei jede Spule (c1-c6, c7-c12, c13-c18) mit zwei Anschlüssen versehen ist, die mit der Umschalteinheit (7) verbunden sind.

12. Elektrisches Maschinensystem (1) nach Anspruch 11, wobei in einer 6-phasigen Konfiguration die sechs Spulen (c1-c6, c7-c12, c13-c18) jeder dreiphasigen Wicklung in einer 3-phasigen Konfiguration mit Hilfe der Umschalteinheit (7) in zwei Sätze von drei Spulen unterteilt werden, um 6 elektrische Phasen zu erhalten.

13. Elektrisches Maschinensystem (1) nach Anspruch 11 oder 12, wobei in einer 9-phasigen Konfiguration die sechs Spulen (c1-c6, c7-c12, c13-c18) jeder dreiphasigen Wicklung in einer 3-phasigen Konfiguration mit Hilfe der Umschalteinheit (7) in drei Sätze von zwei Spulen unterteilt werden, um 9 elektrische Phasen zu erhalten.

14. Elektrisches Maschinensystem (1) nach einem der Ansprüche 11-13, wobei in einer 12-phasigen Konfiguration die sechs Spulen (c1-c6, c7-c12, c13-c18) jeder dreiphasigen Wicklung in einer 3-phasigen Konfiguration mittels der Schalteinheit (7) in zwei Sätze von einer Spule und zwei Sätze von zwei Spulen unterteilt sind, um 12 elektrische Phasen zu erhalten.

15. Elektrisches Maschinensystem (1) nach Anspruch 14, wobei jede Spule (c1, c6, c7, c12, c13, c18) der Sätze mit einer einzigen Spule in der 12-phasigen Konfiguration so viele Windungen aufweist wie die Gesamtzahl der Windungen der Spulen (c2-c5, c8-c11, C14-C17) in jedem der Sätze mit zwei Spulen.

## Revendications

1. Procédé de commande d'une machine électrique (3) comprenant des enroulements de stator (3a-3c) qui sont reconfigurables entre une configuration en 3 phases et une configuration en 3n phases, où n est un entier quelconque dans la plage allant de 1 à N, le procédé comprenant :
a) la commutation du nombre de phases électriques de la machine électrique (3) entre 3 phases et 3n phases sur la base d'une vitesse de fonctionnement de la machine électrique (3),
la commutation entre une configuration en 3n phases et une configuration en 3(n+1) phases étant réalisée dans une plage de vitesse comprise entre n et (n+1) fois une vitesse nominale de la configuration en 3 phases, **caractérisé en ce que** chaque enroulement de stator (3a-3c) comprend une pluralité de bobines connectées en série (c1-c6, c7-c12, c13-c18) dans la configuration en trois phases, dans toutes les configurations tous les enroulements de stator (3a-3c) étant utilisés en sous-divisant les bobines (c1-c6, c7-c12, c13-c18) pour ajuster le nombre de phases électriques.

2. Procédé selon la revendication 1, dans l'étape a) le nombre de phases électriques augmentant à mesure que la vitesse de fonctionnement augmente.

3. Procédé selon la revendication 1 ou 2, la plage de vitesse étant comprise entre n et (n+0,5) fois la vitesse nominale de la configuration en 3 phases.

4. Procédé selon la revendication 3, la plage de vitesse étant une unique valeur qui est (n+0,5) fois la vitesse nominale de la configuration en 3 phases.

5. Procédé selon la revendication 1 ou 2, la plage de vitesse étant comprise entre (n+0,5) et (n+1) fois la vitesse nominale de la configuration en 3 phases.

6. Procédé selon la revendication 5, la plage de vitesse étant une unique valeur qui est (n+1) fois la vitesse nominale de la configuration en 3 phases.

7. Procédé selon l'une quelconque des revendications précédentes, N = 4.

8. Programme d'ordinateur, comprenant un code d'ordinateur qui, lorsqu'il est exécuté par une circuiterie de traitement (9b) d'un système de commande (9), amène le système de commande (9) à réaliser les étapes du procédé selon l'une quelconque des revendications 1 à 7.

9. Système de commande (9) pour commander une machine électrique (3) comprenant des enroulements de stator (3a-3c) qui sont reconfigurables entre une configuration en 3 phases et une configuration en 3n phases, où n est un entier dans la plage allant de 1 à N, le système de commande (3) comprenant :
une circuiterie de traitement (9b), et
un support de stockage (9a) comprenant un code d'ordinateur,
**caractérisé en ce que** le système de commande (9) est configuré pour exécuter les étapes du procédé selon l'une quelconque des revendications 1 à 7 lorsque le code d'ordinateur est exécuté par la circuiterie de traitement (9b) .

10. Système (1) de machine électrique, comprenant :
une machine électrique (3) comportant des enroulements de stator (3a-3c) reconfigurables entre une configuration en 3 phases et une configuration en 3n phases, où n est un entier quelconque dans la plage allant de 1 à N,
une unité de commutation (7) connectée aux enroulements de stator (3a-3c), l'unité de commutation (7) comprenant des commutateurs configurés pour reconfigurer les connexions des enroulements de stator (3a-3c), et
un système de commande (9) selon la revendication 9, configuré pour reconfigurer les enroulements de stator (3a-3c) entre la configuration en 3 phases et la configuration en 3n phases en commandant les commutateurs.

11. Système (1) de machine électrique selon la revendication 10, les enroulements de stator (3a-3c) consistant en trois enroulements de phases dans une configuration en 3 phases, de laquelle chaque enroulement de phases consiste en six bobines (c1-c6, c7-c12, c13-c18), chaque bobine (c1-c6, c7-c12, c13-c18) étant prévue avec deux bornes qui sont connectées à l'unité de commutation (7).

12. Système (1) de machine électrique selon la revendication 11, dans une configuration en 6 phases, les six bobines (c1-c6, c7-c12, c13-c18) de chacun des trois enroulements de phases dans une configuration en 3 phases étant sous-divisées au moyen de l'unité de commutation (7) en deux ensembles de trois bobines pour obtenir 6 phases électriques.

13. Système (1) de machine électrique selon la revendication 11 ou 12, dans une configuration en 9 phases, les six bobines (c1-c6, c7-c12, c13-c18) de chacun des trois enroulements de phases dans une configuration en 3 phases étant sous-divisées au moyen de l'unité de commutation (7) en trois ensembles de deux bobines pour obtenir 9 phases électriques.

14. Système (1) de machine électrique selon l'une quelconque des revendications 11 à 13, dans une configuration en 12 phases, les six bobines (c1-c6, c7-c12, c13-c18) de chacun des trois enroulements de phases dans une configuration en 3 phases étant sous-divisées au moyen de l'unité de commutation (7) en deux ensembles d'une bobine et deux ensembles de deux bobines pour obtenir 12 phases électriques.

15. Système (1) de machine électrique selon la revendication 14, chaque bobine (c1, c6, c7, c12, c13, c18) des ensembles avec une unique bobine dans la configuration en 12 phases ayant autant de spires que le nombre total de spires des bobines (c2-c5, c8-c11, c14-c17) dans chacun des ensembles de deux bobines.
